# EUROPEAN PATENT SPECIFICATION

(11) **EP 4 465 498 B1**
(45) Date of publication and mention of the grant of the patent: **15.04.2026**
(21) Application number: 23856120.3
(22) Date of filing: 28.04.2023
(51) Int. Cl.: H02K 5/04, H02K 7/06, B06B 1/04, H04M 1/02, H02K 3/26, H02K 3/52, H02K 33/16

(54) **VIBRATION MOTOR AND ELECTRONIC DEVICE**
VIBRATIONSMOTOR UND ELEKTRONISCHE VORRICHTUNG
MOTEUR VIBRANT ET DISPOSITIF ÉLECTRONIQUE

(30) Priority: 26.08.2022 CN 202211031713
(43) Date of publication of application: 20.11.2024
(73) Proprietor: Honor Device Co., Ltd., Shenzhen, Guangdong 518040 (CN)
(72) Inventor: ZHU, Jianwei, Shenzhen, Guangdong 518040 (CN); HUANG, Song, Shenzhen, Guangdong 518040 (CN)
(74) Representative: Gill Jennings & Every LLP
(86) International application number: PCT/CN2023/091478
(87) International publication number: WO 2024/041026

(56) References cited:
- WO-A1-2022/067921
- CN-A- 103 248 755
- CN-A- 107 317 454
- CN-A- 115 085 437
- CN-U- 205 092 753
- CN-U- 206 866 813
- CN-U- 211 530 979
- CN-U- 214 380 585
- CN-U- 214 380 585
- CN-U- 215 498 695
- JP-A- 2010 130 728
- US-A1- 2021 296 978

## Description

### TECHNICAL FIELD

This application relates to the field of electronic products, and in particular, to a vibration motor and an electronic device.

### BACKGROUND

A vibration motor is a component that uses a principle of generating electromagnetic force to convert electrical energy into mechanical vibration. The vibration motor has become an indispensable and important component in an electronic device such as a mobile phone. A driving motor may be applied to main modules such as a vibration reminder for an incoming call and an alarm reminder. In addition, at present, the driving motor may also provide tactile vibration feedback in conjunction with an application function.

As functions of the electronic device increase continuously, a space reserved for the vibration motor becomes increasingly tight. In particular, for a new electronic device, to ensure some important functions, a layout space for the vibration motor has to be further reduced.

Therefore, how to make a structure of the electronic device as compact as possible while achieving a good vibration effect and vibration experience is a technical problem that a person skilled in the art has long faced.

In the prior art, CN206866813 relates to an electronic device comprising a back shell with a receiving space, a middle frame fixed in the receiving space, and a vibration motor fixed to the middle frame.

### SUMMARY

Embodiments of this application provide a vibration motor with a compact structure and a strong vibration sense and an electronic device.

A first aspect of this application provides a vibration motor, including a housing, where a driving coil and a movable component are disposed in an inner cavity of the housing, and the driving coil is configured to drive the movable component to reciprocate relative to the housing to generate vibration: a first side wall of the housing has a protruding portion protruding toward a side facing away from the movable component, the protruding portion forms a concave cavity with an opening facing the movable component, and the driving coil is at least partially located in the concave cavity. Generally, the vibration motor is fixed to the housing of the electronic device through a bracket. In order not to increase a thickness of the electronic device, an outer wall of the protruding portion is located inside the bracket as much as possible or the outer wall of the protruding portion is flush with an outer wall of the bracket. The protruding portion may be in a shape of a cylinder, and certainly may be alternatively in another shape, which is determined according to a specific product.

In this application, a partial region of a first side wall of the housing of the vibration motor protrudes outward to form the concave cavity with an opening facing the movable component. The driving coil is partially or completely located in the concave cavity. In a case that a same electromagnetic force is achieved, the vibration motor in this application may reduce a height of the driving coil protruding from the opening of the concave cavity as much as possible. In this way, a design space for the movable component is increased to a certain extent, and a volume of the movable component may be increased, thereby increasing a weight of the movable component, improving a vibration effect, and improving vibration experience of a user. In addition, a structure of the vibration motor is more compact, which helps reduce a thickness of the electronic device, and meets a design requirement for a light and thin electronic device.

Elastic components are disposed between two opposite side walls of the movable component and inner walls of the housing on corresponding sides. The elastic components may be different types of springs, such as a cylindrical spring, a C-shaped spring, a V-shaped spring, and a W-shaped spring. When the driving coil is powered on by an alternating current, the movable component alternately compresses the elastic components on both sides and reciprocates relative to the housing, and each elastic component vibrates at a high frequency to generate vibration. The movable component may be supported on the first side wall, and certainly may alternatively be suspended relative to the first side wall.

The vibration motor further includes a circuit board, where the circuit board includes a first part located in the inner cavity and a second part located outside the inner cavity, a first connection end and a second connection end are disposed on the second part, the driving coil is opposite to the first part, and both ends of the driving coil are electrically connected to the first connection end and the second connection end respectively. The circuit board may be a flexible printed circuit board, including an insulating substrate and a wire arranged on the substrate, and the insulating substrate may have predetermined flexibility. The first connection end and the second connection end may be disposed on a same side of the circuit board, and certainly may alternatively be disposed on two sides of the circuit board. The first connection end and the second connection end each may be a solder pad structure, or may be in a form of a connecting finger. The both ends of the driving coil may be electrically connected to the first connection end and the second connection end respectively through the wire arranged on the substrate. Certainly, the driving coil may alternatively be directly connected to the first connection end or the second connection end.

In this application, by arranging a corresponding wire on the circuit board, the driving coil is connected to an external power supply line, which is simple and easy to implement. In addition, the circuit board occupies a small space, which helps reduce a thickness of the vibration motor, thereby reducing the thickness of the electronic device.

The driving coil includes a cylindrical coil and a planar coil, the planar coil is disposed on the first part and wound round by round in a plane of the circuit board along a predetermined direction, and the planar coil and the cylindrical coil are connected in series and have a same current rotation direction. In this embodiment, a line is disposed on the circuit board to form a planar coil. The planar coil and a conventional cylindrical coil are connected in series to form a driving coil with a same current rotation direction. When powered on, the planar coil and the cylindrical coil jointly generate an alternating magnetic field, which increases an intensity of an electromagnetic field of the driving coil to a certain extent, and can drive a heavier movable component, improving the vibration performance of the vibration motor.

Based on the first aspect, embodiments of this application further provide a fourth implementation of the first aspect: the planar coil includes a first planar coil and a second planar coil connected in series and having a same current rotation direction, the first planar coil is located on a first side surface of the circuit board facing the movable component, and the second planar coil is located on a second side surface of the circuit board facing away from the movable component. In this embodiment, spaces on both side surfaces of the circuit board are fully utilized, the first planar coil and the second planar coil are disposed on the both side surfaces respectively, which further increases the intensity of the electromagnetic field generated by the driving coil, thereby improving the vibration performance.

Based on the fourth implementation of the first aspect, embodiments of this application further provide a fifth implementation of the first aspect: the cylindrical coil includes a first cylindrical coil and a second cylindrical coil, the first cylindrical coil is located on the first side surface, and the second cylindrical coil is located on the second side surface; and the first cylindrical coil, the first planar coil, the second planar coil, and the second cylindrical coil are electrically connected end to end in sequence, and a free end of the first cylindrical coil and a free end of the second cylindrical coil are electrically connected to the first connection end and the second connection end respectively. Structures of the first cylindrical coil and the second cylindrical coil may be completely the same, or may be different. Dimensions and shapes of the first cylindrical coil and the second cylindrical coil are properly set according to a specific product. In this implementation, cylindrical coils are disposed on the both sides of the circuit board, which may make full use of the space, and increase an electromagnetic field force generated by the driving coil as much as possible while taking the structure compactness into account, thereby improving the vibration performance of the vibration motor.

Based on the fifth implementation of the first aspect, embodiments of this application further provide a sixth implementation of the first aspect: the first cylindrical coil, the first planar coil, the second planar coil, and the second cylindrical coil are coaxially arranged. The coaxially arranged coils help form an electromagnetic field with a high magnetism gathering capacity.

Based on the fifth or sixth implementation of the first aspect, embodiments of this application further provide a seventh implementation of the first aspect: at least part of an edge region of a second side surface of the first part is supported at the opening of the concave cavity, and the second cylindrical coil is completely located inside the concave cavity. In this implementation, the circuit board is directly supported on the first side wall without another third component. A dimension of the vibration motor in a thickness direction is reduced as much as possible. The circuit board may be fixed to the first side wall in an adhesive manner or the like.

Based on the fifth to the seventh implementations of the first aspect, embodiments of this application further provide an eighth implementation of the first aspect: the first cylindrical coil and the second cylindrical coil are fixed to the circuit board through an adhesion process. In this implementation, the cylindrical coils are fixed to the circuit board through the adhesion process, and the process is simple and easy to implement.

Based on the fifth to the seventh implementations of the first aspect, embodiments of this application further provide a ninth implementation of the first aspect: a magnetic core component is further disposed in an inner hole of at least one of the first cylindrical coil and the second cylindrical coil. The magnetic core component may be an iron core, or may be another magnetically conductive material, for example, a soft magnetic material, a ferrite core, or an iron-silicon-aluminum core. The magnetic core component can improve magnetism gathering performance of the driving coil to a certain extent, so that an electric field force generated by the driving coil after being powered on is further improved, thereby improving the vibration performance.

Based on the ninth implementation of the first aspect, embodiments of this application further provide a tenth implementation of the first aspect: a distance between the magnetic core component and the movable component is greater than a distance between the first cylindrical coil and the movable component. In other words, compared with the first cylindrical coil, the magnetic core component is far away from the movable component. In this way, influence of a magnetic field generated by a magnetic steel on the movable component on the magnetic core component may be weakened.

Based on the ninth or tenth implementation of the first aspect, embodiments of this application further provide an eleventh implementation of the first aspect: the circuit board has a through hole, the through hole runs through inner ring regions of the first planar coil and the second planar coil, and the magnetic core component runs through the through hole. The magnetic core component is partially located in inner rings of the first planar coil and the second planar coil, which may further have a magnetism gathering effect on a magnetic field generated by powering on the first planar coil and the second planar coil on the circuit board, thereby improving overall performance of the driving coil, and improving a vibration sense of the vibration motor.

Based on the eleventh implementation of the first aspect, embodiments of this application further provide a twelfth implementation of the first aspect: the magnetic core component includes a first magnetic core portion, a second magnetic core portion, and a third magnetic core portion, the first magnetic core portion is located in the inner hole of the first cylindrical coil and matches the inner hole of the first cylindrical coil, the second magnetic core portion is located in the inner hole of the second cylindrical coil and matches the inner hole of second cylindrical coil, and third magnetic core portion matches the through hole. In this implementation, each magnetic core portion roughly matches an inner hole of a corresponding coil, that is, an outline of a cross-sectional of each magnetic core component is basically the same as the inner hole of the corresponding coil, which can improve the magnetism gathering capacity to a certain extent.

Based on the twelfth implementation of the first aspect, embodiments of this application further provide a thirteenth implementation of the first aspect: the first magnetic core portion, the second magnetic core portion, and the third magnetic core portion are an integrated structure or separate structures. The first magnetic core portion, the second magnetic core portion, and the third magnetic core portion are separate structures, which has a simple processing process and is easy to install. The first magnetic core portion may be integrally formed with the first cylindrical coil, the second magnetic core portion may be integrally formed with the second cylindrical coil, and the third magnetic core portion may be integrally formed with the circuit board. Certainly, the first magnetic core portion, the second magnetic core portion, and the third magnetic core portion may alternatively be an integrated structure, to reduce a quantity of components of the vibration motor.

Based on the fifth to thirteenth implementations of the first aspect, embodiments of this application further provide a fourteenth implementation of the first aspect: the movable component has a groove at a position opposite to the second cylindrical coil, and the second cylindrical coil partially extends into the groove. On the premise of maximizing a weight of the movable component, by providing the groove under the movable component, a number of turns of the driving coil may be increased as much as possible to increase an electromagnetic driving force, thereby improving the vibration sense.

Based on the second to fourteenth implementation of the first aspect, embodiments of this application further provide a fifteenth implementation of the first aspect: the first side wall has an extension portion, the extension portion is located outside the inner cavity, and the second part is supported on the extension portion. A shape of the extension portion may be roughly the same as a shape of the second part of the circuit board, and certainly may alternatively be larger than or smaller than the second part, that is, a projection of the second part on the extension portion is completely inside the extension portion, or partially exceeds the extension portion, provided that the second part can be supported.

Based on the fifteenth implementation of the first aspect, embodiments of this application further provide a sixteenth implementation of the first aspect: the movable component includes a mass block and at least one magnetic steel installed on the mass block, and the elastic component is installed between the mass block and the housing.

Based on the second to sixteenth implementations of the first aspect, embodiments of this application further provide a seventeenth implementation of the first aspect: the circuit board is a flexible printed circuit board. The flexible printed circuit board is thin and flexible, can be bent and folded freely, and has high layout flexibility.

A second aspect of this application further provides an electronic device, including the vibration motor according to any one of the foregoing implementations, where the vibration motor is fixed to the electronic device through a bracket, and along a direction in which the protruding portion protrudes, an outer wall of the protruding portion does not exceed an outer wall of the bracket.

Based on the second aspect, embodiments of this application further provide a first implementation of the second aspect: the first side wall includes a support wall and the protruding portion fixedly connected to each other, the support wall is attached and fixed to the bracket, the bracket has an avoidance space, and the protruding portion is located in the avoidance space. The support wall is attached and fixed to the bracket, so that a support area is large, which helps improve the fixation reliability of the vibration motor.

Based on the first implementation of the second aspect, embodiments of this application further provide a second implementation of the second aspect: the avoidance space includes a through hole. The through hole has a simple processing process.

Based on the second implementation of the second aspect, embodiments of this application further provide a third implementation of the second aspect: a predetermined gap is provided between the protruding portion and an inner wall of the through hole. In this way, when the vibration motor vibrates, the protruding portion does not collide with the bracket, avoiding generation of noise and improving quality of the electronic device.

Based on the first to third implementations of the second aspect, embodiments of this application further provide a fourth implementation of the second aspect: the support wall and the bracket are fixed through an adhesive layer. The adhesive layer may be a structural adhesive, or may be a double-sided adhesive, or may be a back adhesive. The fixing manner is simple and reliable, and occupies a small space.

Based on the second aspect to the fourth implementation of the second aspect, embodiments of this application further provide a fifth implementation according to the second aspect: the bracket is a middle plate of a middle frame assembly of the electronic device or a PCB of the electronic device.

The electronic device provided in this application includes the foregoing vibration motor, so that the electronic device has the above technical effects of the vibration motor.

### BRIEF DESCRIPTION OF DRAWINGS

FIG. 1 is a schematic front view of an electronic device in an example of this application;
FIG. 2 is a schematic diagram of main components of the electronic device shown in FIG. 1 with a back cover hidden;
FIG. 3 is a schematic cross-sectional view at A-A in FIG. 2;
FIG. 4 is a schematic diagram of a vibration motor along a first direction in an example of this application;
FIG. 5 is a schematic cross-sectional view of the vibration motor shown in FIG. 4 along a line B-B;
FIG. 6 is a schematic exploded view of the vibration motor shown in FIG. 4;
FIG. 7 is a schematic enlarged view at a position C in FIG. 5;
FIG. 8 is a schematic diagram of the vibration motor shown in FIG. 4 along a second direction;
FIG. 9 is a schematic front view of the vibration motor shown in FIG. 4 with part of a housing hidden;
FIG. 10 is a cross-sectional view of a first side wall, a driving coil, and a circuit board assembly in the vibration motor shown in FIG. 4;
FIG. 11 is a schematic diagram of a first side surface of a circuit board of the vibration motor shown in FIG. 4;
FIG. 12 is a schematic diagram of a second side surface of a circuit board of the vibration motor shown in FIG. 4;
FIG. 13 is a three-dimensional schematic diagram of a cover body of the vibration motor in FIG. 4;
FIG. 14 is a schematic diagram of a first side wall of the vibration motor shown in FIG. 4;
FIG. 15 is a schematic diagram of assembly of a mass block and an elastic component in the vibration motor shown in FIG. 4;
FIG. 16 is a schematic diagram of a partial structure of a vibration motor in a second example of this application; and
FIG. 17 is a schematic diagram of a partial structure of a vibration motor in a third example of this application.

### DESCRIPTION OF EMBODIMENTS

For the vibration motor mentioned in the background, in this application, a lot of researches have been conducted on installing the vibration motor in an electronic device. It is found through research that a current vibration motor is mainly supported inside a housing of the electronic device through an installation bracket. A mass block and a driving coil are arranged up and down inside the vibration motor. After the vibration motor is installed in the electronic device through the installation bracket, an overall installation height is roughly equal to a sum of heights of the mass block, the driving coil, and the installation bracket. Although at present, a person skilled in the art sets a minimum limit value for each of the heights of the mass block, the driving coil, and the installation bracket, in consideration of a vibration effect and a good vibration experience, a decrease in a height direction of the vibration motor after being installed is also very limited.

Based on the foregoing research finding, this application proposes a unique technical solution that can further reduce the installation height of a driving motor.

In the description of this application, it should be noted that, in embodiments of this application, the terms such as "first" and "second" are used merely for the purpose of description, and should not be construed as indicating or implying relative importance or implying a number of indicated technical features. Therefore, a feature defined by "first", "second", or the like may explicitly or implicitly includes one or more features.

In the description of embodiments of this application, it should be noted that, unless otherwise explicitly specified or defined, the terms such as "install", "connect", and "connection" should be understood in a broad sense. For example, the "connection" may be a detachable connection or a non-detachable connection; or may be a direct connection or an indirect connection through an intermediary. A "fixed connection" means that there is a mutual connection and a relative position relationship remains unchanged after the connection. A "rotatable connection" means that there is a mutual connection and relative rotation can be implemented after the connection. A "slidable connection" means that there is a mutual connection and relative sliding can be implemented after the connection.

Orientation terms such as "inside" and "outside" mentioned in embodiments of this application merely refer to directions in the accompanying drawings. Therefore, the used orientation terms are intended for better and clearer description and understanding of embodiments of this application, and are not intended for indicating or implying that an indicated apparatus or element needs to have a specific orientation or be constructed and operated in a specific orientation, and therefore shall not be construed as limitations on embodiments of this application. In addition, unless otherwise specified in this application, "a plurality of" described in this application means two or more.

In the description of embodiments of this application, the term "include", "have", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. Without further limitation, an element defined by a sentence "including a..." does not exclude that other identical elements also exist in the process, method, article, or apparatus including the element.

"And/or" in embodiments of this application describes only an association relationship of associated objects and represents that three relationships may exist. For example, A and/or B may represent the following three cases: Only A exists, both A and B exist, and only B exists. In addition, the character "/" in this specification generally indicates an "or" relationship between the associated objects.

To enable a person skilled in the art to better understand the technical solutions of the present invention, the following describes the present invention in further detail with reference to the accompanying drawings and specific embodiments.

A middle frame provided in embodiments of this application may be applied to an electronic device, where the electronic device may be a mobile terminal, for example, a mobile phone, a tablet computer, a tablet computer accessory, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), or may be a professional photography device, for example, a digital camera, a single-lens reflex camera/mirrorless interchangeable-lens camera, a sport camera, a gimbal camera, or an unmanned aerial vehicle. A specific type of the electronic device is not limited in embodiments of this application. For ease of understanding, the following is described by using an example in which the electronic device is a mobile phone.

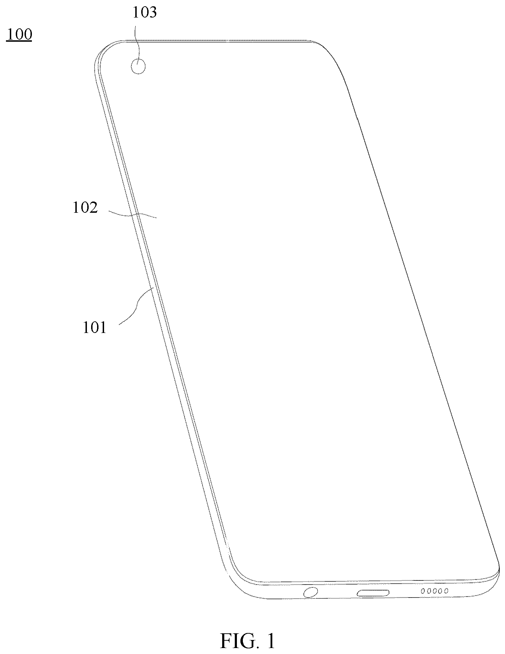

Referring to FIG. 1, FIG. 1 is a schematic front view of an electronic device according to an embodiment of this application.

An electronic device 100 provided in embodiments of this application includes a display screen 102 and a housing assembly 101. The housing assembly 101 has two main functions. The housing assembly provides an installation base for each component of the electronic device 100, and provides a protection function for some components. An accommodating cavity may be formed inside the housing assembly 101, and various components of the electronic device 100 may be disposed inside the accommodating cavity. A material of the housing assembly 101 is not limited herein. In specific practice, a person skilled in the art may select the material based on an actual requirement. For example, the material may be a metal material, a plastic material, a ceramic material, a glass material, or the like.

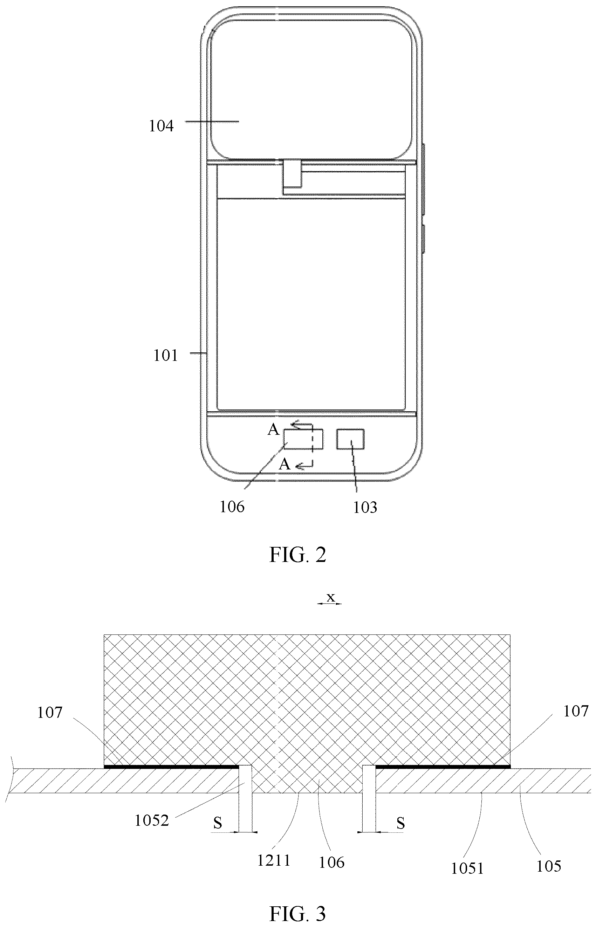

Referring to FIG. 2, FIG. 2 is a schematic structural diagram of a housing of the electronic device shown in FIG. 1 with a back cover removed, and only main components are shown in the figure.

Specifically, the components installed inside the housing assembly 101 may include a main board 104, a battery module, a wireless communication module, a camera module, an audio playback module, and the like. An arrangement position and installation manner of each of these components are not specifically limited in this application. A person skilled in the art should understand that, the electronic device may include one or more of the components listed above, and certainly may alternatively be not limited to the components listed above in this specification, and may further include other components.

Referring to FIG. 3, FIG. 3 is a cross-sectional view at A-A in FIG. 2.

A vibration motor is provided in this application. The vibration motor may be configured to generate a vibration prompt, which may be used as a vibration prompt for an incoming call, or may be used as a touch vibration feedback. For example, when the vibration motor is used in different application modules (for example, a camera module, an audio playback module, and a display screen), the vibration motor may correspond to different vibration feedback effects. For example, when the vibration motor is used in the camera module, a photographing anti-shake effect may be provided. FIG. 3 shows a specific example in which the vibration motor is disposed close to a speaker 103, where vibration of the vibration motor may be applied to the speaker 103. For touch operations performed on different regions of the display screen, the vibration motor may also correspond to different vibration feedback effects. For different application scenarios (for example, a time reminder, information receiving, an alarm clock, and a game), the vibration motor may further correspond to different vibration feedback effects. A touch vibration feedback effect may be further customized.

Referring to FIG. 3, a vibration motor 106 is fixed to the housing assembly of the electronic device through a bracket 105. In an example, the bracket 105 may be fixed to a middle plate of the housing assembly. Certainly, the bracket 105 may alternatively be a PCB (printed circuit board, printed circuit board), and certainly may alternatively be another component that can stably support the vibration motor in the electronic device. The vibration motor 106 may be fixed to the bracket 105 through an adhesive layer 107, where the adhesive layer 107 may be a structural adhesive, a double-sided adhesive, a back adhesive, or the like.

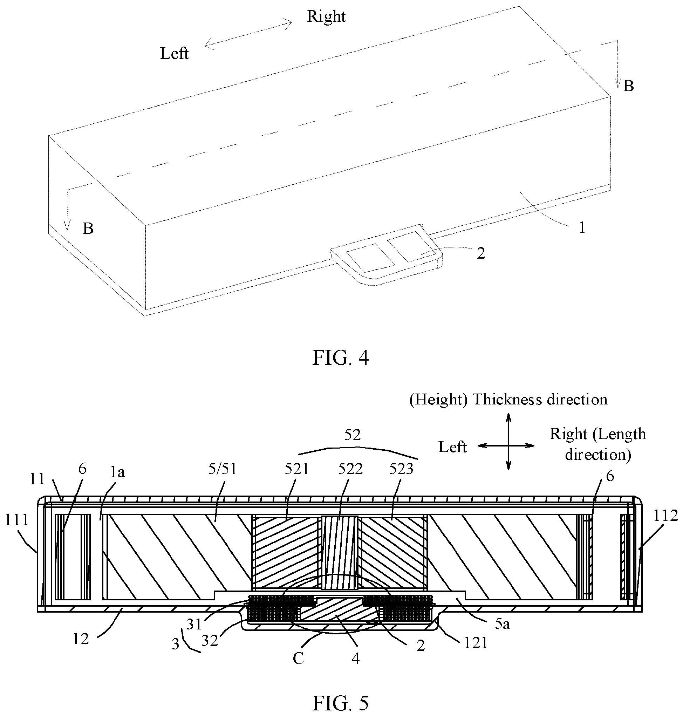

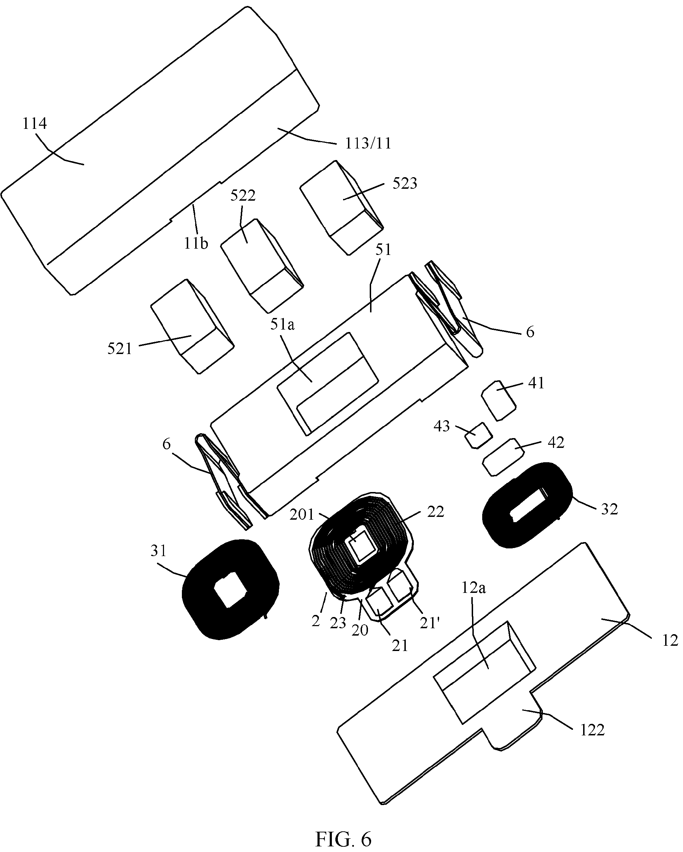

Referring to FIG. 4 to FIG. 6, FIG. 4 is a schematic diagram of a vibration motor along a first direction in an example of this application; FIG. 5 is a schematic cross-sectional view of the vibration motor shown in FIG. 4 along a line B-B; FIG. 6 is a schematic exploded view of the vibration motor shown in FIG. 4.

With reference to FIG. 5, FIG. 6, and FIG. 7 for understanding, the vibration motor 106 of this application includes important components such as a housing 1, a driving coil 3, a movable component 5, and an elastic component 6. The vibration motor 106 of this application may be used as a linear vibration motor.

Referring to FIG. 5, the housing 1 of this application has an inner cavity 1a, and the driving coil 3, the movable component 5, and the elastic component 6 are all installed in the inner cavity 1a of the housing 1.

The housing 1 mainly protects the components located therein. The housing 1 may be made of a metal material with a high strength. Certainly, the housing 1 may alternatively be made of another material while a usage requirement is met. A shape of the housing 1 may be roughly a cuboid, roughly including six side walls. For brevity in describing the technical solutions, the six side walls of the housing 1 are respectively defined herein as: a first side wall 12, a second side wall 111, a third side wall 112, a fourth side wall 113, a fifth side wall 114, and a sixth side wall (not marked), where the second side wall to the sixth side wall form a cover body 11. The cover body 11 has the inner cavity 1a with a lower end opening, and the first side wall 12 is installed as a bottom wall at an opening position of the cover body 11.

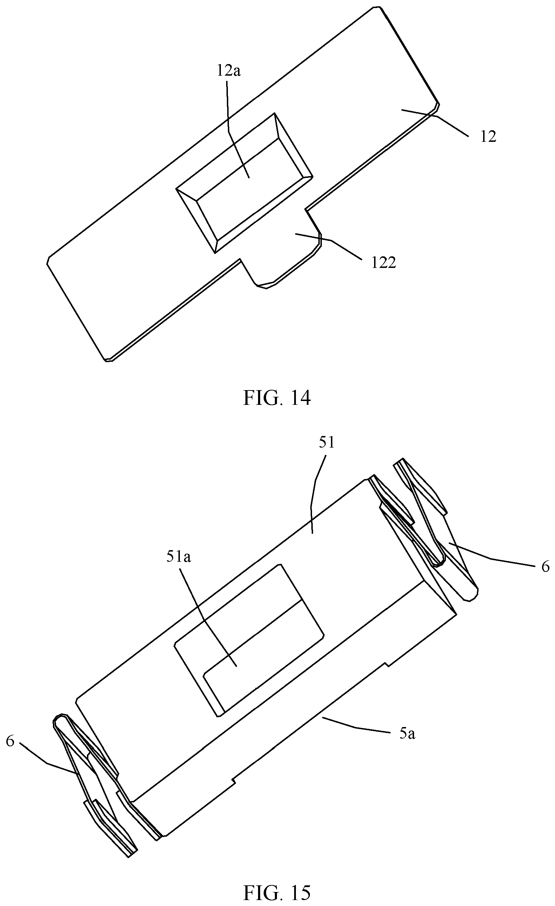

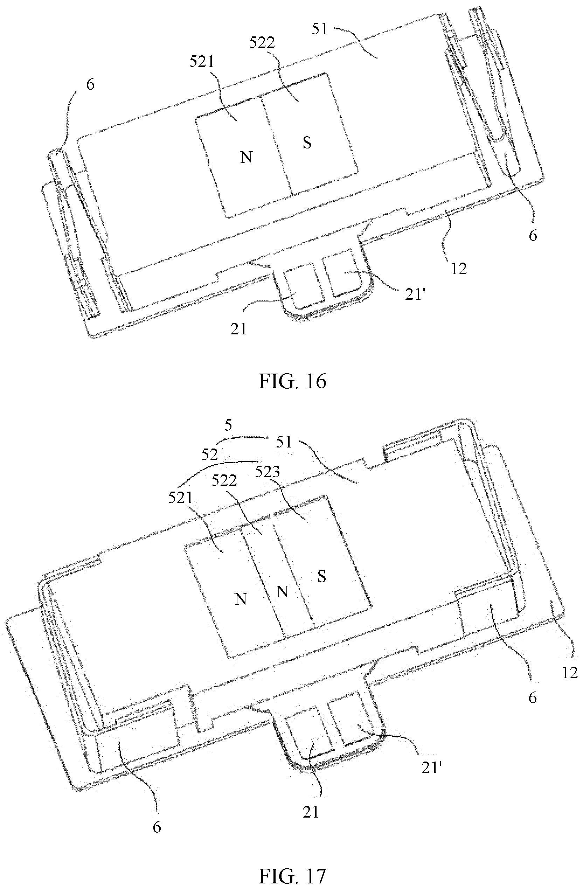

The elastic component 6 vibrates when being compressed or stretched at a high frequency. The elastic component 6 may be a spring, such as a cylindrical spring, a C-type spring, a V-type spring, or a W-type spring. FIG. 15 and FIG. 16 show examples in which the spring is the V-type spring, and FIG. 18 shows an example in which the spring is the C-type spring. Certainly, a form of the elastic component 6 is not limited to the form of the spring described herein, and may alternatively be another elastic component 6 with elasticity.

The elastic component 6 is generally installed on two opposite side walls of the movable component 5. As shown in FIG. 5 and FIG. 6, the elastic component 6 is installed on both a left side wall and a right side wall of the movable component 5, and refer to FIG. 5 for a left-right direction. Two sides of the vibration motor 106 along a length direction are defined as left and right sides in this specification. The elastic component 6 may be fixedly connected to the movable component 5 through adhesion, welding, or the like. Another end of the elastic component 6 abuts against and is in contact with a corresponding side wall of the housing 1 of the vibration motor 106. Referring to 9, the elastic component 6 is disposed between the second side wall 111 of the housing 1 and the left side wall of the movable component 5, and between the third side wall 112 and the right side wall of the movable component 5. The left elastic component 6 can abut against the second side wall 111, and the right elastic component 6 can abut against the third side wall 112. The another end of the elastic component 6 may be fixedly connected to the housing 1 through adhesion, welding, or the like.

When the driving coil 3 in this application is powered on, the movable component 5 can be driven to reciprocate relative to the housing 1 to generate vibration. In an initial state, the movable component 5 is located at an intermediate position between the second side wall 111 and the third side wall 112. In this case, a distance between the left side wall of the movable component 5 and the second side wall 111 and a distance between the right side wall of the movable component 5 and the third side wall 112 are maximum movement amplitudes of the movable component 5 moving to the left and the right. When the driving coil 3 is powered on, the movable component 5 reciprocates between the first side wall 111 and the second side wall 112. That is, when the movable component moves to the left, the left elastic component 6 is compressed and the right elastic component 6 is pulled to the left, and when the movable component 5 moves to the right, the right elastic component 6 is compressed and the left elastic component 6 is pulled to the right. The vibration is generated mainly due to the high-frequency compression or stretching of the elastic components 6 on the two sides.

The movable component 5 includes a mass block 51 with a predetermined weight and at least one magnetic steel 52 installed on the mass block 51. A larger mass block 51 indicates higher motion inertia of the movable component 5, correspondingly, a stronger capability of compressing or stretching the elastic component, and a better vibration effect. A number of magnetic steels 52 may be one, two, three, or more. FIG. 6 and FIG. 17 show examples in which the number of the magnetic steels is three. FIG. 16 shows only three magnetic steels (a first magnetic steel 521, a second magnetic steel 522, and a third magnetic steel 523), where the second magnetic steel 522 is located between the first magnetic steel 521 and the third magnetic steel 523. A dimension of the second magnetic steel along a length of the vibration motor 106 is smaller than those of the first magnetic steel 521 and the third magnetic steel 523. Each magnetic steel has an N-pole and an S-pole. Magnetic poles of one of the first magnetic steel 521 and the third magnetic steel 523 are arranged in a same direction as magnetic poles of the second magnetic steel 522. FIG. 17 shows a magnetic pole arrangement on upper end portions of the three magnetic steels. Taking FIG. 17 as an example, the magnetic poles of the first magnetic steel 521 and the magnetic poles of the second magnetic steel 522 are arranged in a same direction, with upper end portions are both N-poles, and lower end portions of the two magnetic steels are both S-poles correspondingly. An upper end portion of the third magnetic steel 523 is an S-pole, and a lower end portion thereof is an N-pole. Certainly, arrangement of the magnetic poles of the three magnetic steels is not limited to the manner shown in FIG. 18, and the magnetic poles of the third magnetic steel 523 may alternatively be arranged in a same direction as the magnetic poles of the second magnetic steel 522. A main function of the intermediate magnetic steel is to gather magnetism to strengthen a magnetic field generated by the magnetic steels. FIG. 16 shows an example in which there are two magnetic steels, where the two magnetic steels have different magnetic poles at both ends. Compared with the three magnetic steels, FIG. 16 only includes the first magnetic steel 521 and the third magnetic steel 523, and no intermediate magnetic steel is disposed. Each magnetic steel may be fixed to the mass block 51 through adhesion, casting, or the like.

After the driving coil 3 is powered on by an alternating current, the driving coil 3 generates an alternating electromagnetic field. Through an action of the electromagnetic field, the movable component 5 located above the driving coil and having the magnetic steel is pushed to reciprocate along a predetermined direction (a horizontal direction or another linear direction, such as a direction x shown in FIG. 2), to compress or stretch the elastic component, and the elastic component generates vibration through high-frequency movement.

Certainly, the component in the movable component 5 that cooperates with the driving coil 3 to generate movement may not be limited to the magnetic steel, and may alternatively be implemented through a coil or another component. This is not described too much in this specification.

Referring to FIG. 6 with reference to FIG. 15, in an example, a through hole 51a may be provided in a middle portion of the mass block 51, and the magnetic steel is installed in and fixed to the through hole 51a.

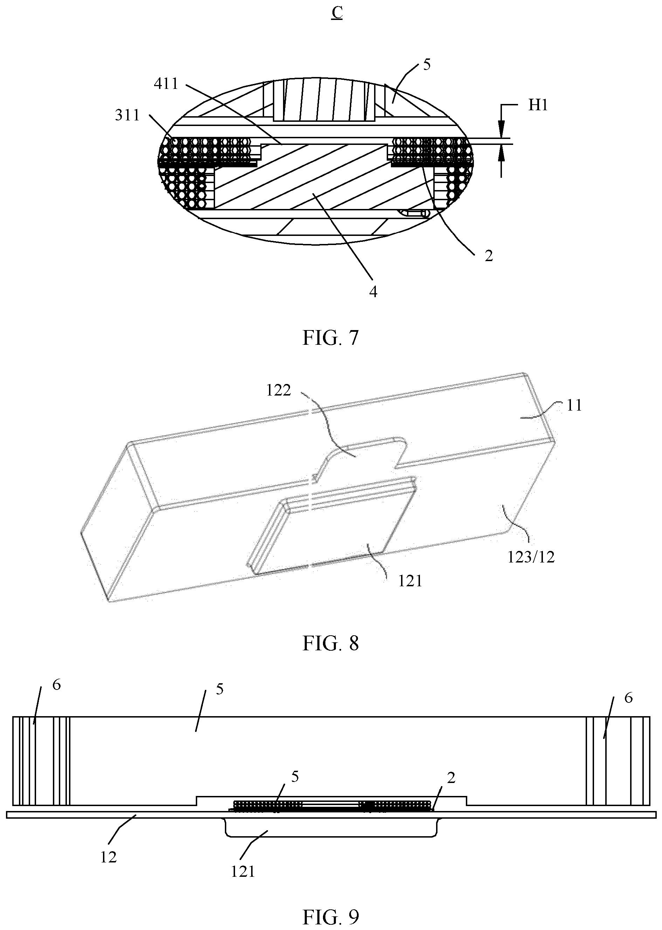

Referring to FIG. 5, FIG. 6, FIG. 7, and FIG. 8 for understanding, in this application, the first side wall of the housing 1 has a protruding portion 121 that protrudes toward a side facing away from the movable component 5, and the protruding portion 121 forms a concave cavity 12a with an opening facing the movable component 5. The driving coil 3 is at least partially located in the concave cavity 12a. That is, along a height direction of the vibration motor 106, the driving coil 3 may be partially located inside the concave cavity 12a, and certainly the driving coil 3 may alternatively be completely located inside the concave cavity 12a. As described above, the vibration motor 106 is usually fixed to a middle frame assembly of the electronic device through a bracket, and the first side wall 12 locally protrudes toward a side on which the bracket is located. In order to reduce a thickness of the electronic device, after the vibration motor 106 is assembled to the bracket, an outer wall of the protruding portion 121 along a height direction (the height direction is also a direction in which the protruding portion 121 protrudes) is located inside the bracket as much as possible, that is, an outer wall 1211 of the protruding portion 121 does not exceed an outer wall surface 1051 of the bracket 105. Referring to FIG. 3, FIG. 3 shows that the outer wall 1211 of the protruding portion 121 is substantially flush with the outer wall surface 1051 of the bracket 105. Correspondingly, a region of the bracket 105 opposite the protruding portion 121 has an avoidance space to accommodate the protruding portion 121. As shown in FIG. 3, the avoidance space on the bracket 105 may be a through hole 1052, and the protruding portion 121 is located inside the through hole 1052. Referring to FIG. 3 and FIG. 8 for understanding, in an example, the first side wall 12 includes a support wall 123 and the protruding portion 121 fixedly connected to each other. The support wall and the protruding portion may be formed through a process such as punching and stretching. The support wall 123 is attached and fixed to the bracket 105. As described above, the support wall and the bracket may be fixed through the adhesive layer 107, and the protruding portion 121 is located inside the through hole 1052.

In this application, a partial region of the first side wall 12 of the housing 1 of the vibration motor 106 protrudes outward to form the concave cavity with an opening facing the movable component 5. The driving coil 3 is partially or completely located in the concave cavity. In a case that a same electromagnetic force is achieved, the vibration motor 106 in this application may reduce a height of the driving coil 3 protruding from the opening of the concave cavity as much as possible. In this way, a design space for the movable component 5 is increased to a certain extent, and a volume of the movable component 5 may be increased, thereby increasing a weight of the movable component 5, and improving a vibration effect. In addition, a structure of the vibration motor 106 is more compact, which helps reduce the thickness of the electronic device, and meets a design requirement for a light and thin electronic device.

One end of the elastic component 6 is fixedly connected to the movable component 5, and another end is fixedly connected to an inner wall of the housing 1. When the elastic component 6 on one side is compressed, the housing 1 also encounters a push force in a corresponding direction, so that the vibration motor has a movement tendency relative to the bracket 105. In an example, when the vibration motor 106 is fixed to the bracket 105 by the adhesive layer 107 and the driving coil is powered on, the vibration motor 106 may have a displacement amount of 0.02 mm to 0.03 mm along the direction x. To avoid noise caused by collision between the vibration motor and the through hole of the bracket 105, there is also a predetermined gap S between the protruding portion and the through hole 1052, as shown in FIG. 2. In an example, the predetermined gap S may approximately range from 0.05 mm to 0.15 mm.

In this application, the vibration motor 106 further includes a circuit board 2. One function of the circuit board 2 is to electrically connect the driving coil 3 in the inner cavity 1a of the vibration motor 106 to a power supply line outside the inner cavity 1a. The circuit board 2 includes an insulating substrate 20 and a wire arranged on the substrate 20. The substrate 20 may be made of a flexible material. That is, the circuit board 2 is a flexible printed circuit board 2, and the wire is a copper foil or another metal sheet printed on the substrate 20. Certainly, the substrate may alternatively be made of an inflexible material. The driving coil 3 is connected to the outside power supply line through the wire.

In an example, the circuit board 2 includes a first part and a second part, where the first part is located in the inner cavity 1a, the second part is located outside the inner cavity 1a, and a first connection end 21 and a second connection end 21' are disposed on the second part. The driving coil 3 is opposite to the first part, and both ends of the driving coil 3 and the first connection end 21 and the second connection end 21' are electrically connected to the first connection end 21 and the second connection end 21' respectively through corresponding wires on the circuit board 2. The first connection end 21 and the second connection end 21' each may be a solder pad structure, and certainly may alternatively be in another form. For example, the wire on the circuit board 2 directly forms the first connection end 21 and the second connection end 21'.

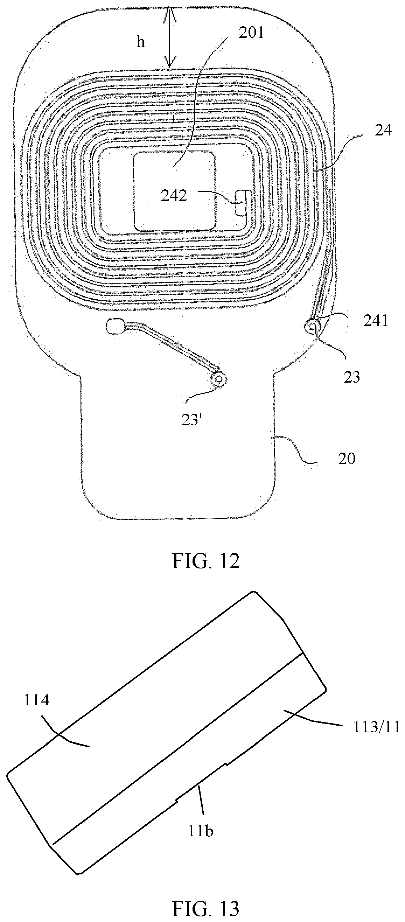

Correspondingly, an outlet 11b for the circuit board 2 to run through is disposed on the housing 1. Referring to FIG. 6 and FIG. 13, in an example, the outlet 11b is disposed on the fourth side wall 113 of the cover body 11. Certainly, a specific arrangement manner of the outlet 11b is not limited to this specification. The outlet 11b may be encircled by a side wall of the cover body 11 and the first side wall 12, or the outlet 11b is provided on the first side wall 12.

In this application, by arranging a corresponding wire on the circuit board 2, the driving coil 3 is connected to an external power supply line, which is simple and easy to implement. In addition, the circuit board 2 occupies a small space, which helps reduce a thickness of the vibration motor 106, thereby reducing the thickness of the electronic device.

Generally, a larger number of turns of the driving coil 3 indicates a larger electronic field force generated by the driving coil, and correspondingly indicates a larger driving force generated by the driving coil 3. However, due to a height limitation of the vibration motor 106, the number of turns of the driving coil 3 is limited. To improve the driving force as much as possible, the following arrangement is further performed in this application.

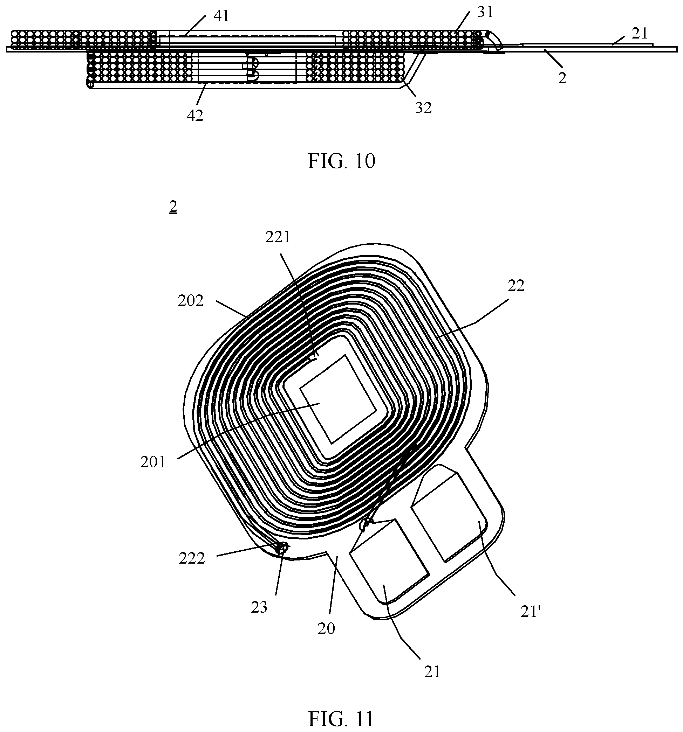

Referring to FIG. 10, FIG. 11, and FIG. 12, FIG. 10 is a cross-sectional view of a first side wall, a driving coil, and a circuit board assembly in the vibration motor shown in FIG. 5, FIG. 11 is a schematic diagram of a first side surface of a circuit board of the vibration motor shown in FIG. 6; and FIG. 12 is a schematic diagram of a second side surface of a circuit board of the vibration motor shown in FIG. 6.

In this application, the driving coil 3 includes a cylindrical coil and a planar coil, where the cylindrical coil is a winding having at least two layers of metal wires along a thickness direction of the vibration motor 106, and each layer is formed by winding of a plurality of turns of metal wires from outside to inside. The planar coil is disposed on the first part of the circuit board 2 and wound round by round in a plane of the circuit board 2 along a predetermined direction, and the planar coil and the cylindrical coil are connected in series and have a same current rotation direction. The same current rotation direction herein is that current rotation directions of the planar coil and metal wires in each layer of the cylindrical coil are the same. The planar coil is formed by wiring on the substrate 20.

In this application, the planar coil disposed on the circuit board 2 increases an intensity of an electromagnetic field generated by the driving coil 3 to a certain extent.

In order to increase the intensity of the electromagnetic field generated by the driving coil 3 as much as possible, planar coils may be disposed on both side surfaces of the circuit board 2, which are a first planar coil 22 and a second planar coil 24 respectively. The first planar coil 22 is located on the first side surface of the circuit board 2 facing the movable component 5, as shown in FIG. 12; and the second planar coil 24 is located on the second side surface of the circuit board 2 facing away from the movable component 5, as shown in FIG. 12.

Referring to FIG. 10 and FIG. 11 for understanding, in this application, the cylindrical coil may include a first cylindrical coil 31 and a second cylindrical coil 32, where the first cylindrical coil 31 is located on the first side surface, the second cylindrical coil 32 is located on the second side surface, and the second cylindrical coil 32 is at least partially located inside the concave cavity. The first cylindrical coil 31, the first planar coil 22, the second planar coil 24, and the second cylindrical coil 32 are electrically connected end to end in sequence. A first end portion 221 of the first planar coil 22 is connected to the first cylindrical coil 31, where the connection may be implemented through welding or the like, and a second end portion 222 of the first planar coil 22 may pass through a first metal member 23 of the substrate 20 to be connected to a first end portion 241 of the second planar coil 24. When the first connection end and the second connection end are disposed on the first side surface of the circuit board 2, a second end portion 242 of the second planar coil 24 passes through a second metal member 23' of the substrate 20 through the wire on the circuit board 2 to be connected to the second connection end 21'. In an example, a first through hole and a second through hole for fixedly installing the first metal member 23 and the second metal member 23' respectively may be provided on the circuit board 2.

A free end of the first cylindrical coil 31 and a free end of the second cylindrical coil 32 are electrically connected to the first connection end 21 and the second connection end 21' respectively. Referring to FIG. 12 and FIG. 13 again, the free end of the first cylindrical coil 31 is connected to the first connection end 21, and the free end of the second cylindrical coil 32 is electrically connected to the second connection end 21', where the first cylindrical coil 31 and the first connection end 21 may be directly connected, or may be connected through a wire prearranged on the circuit board 2. Similarly, the free end of the second cylindrical coil 32 may be directly connected to the second connection end 21', or may be connected through a wire prearranged on the circuit board 2.

In order to improve the driving force of the driving coil 3 as much as possible, the movable component 5 has a groove 5a at a position opposite to the second cylindrical coil 32, and the second cylindrical coil 32 partially extends into the groove 5a.

In this application, the first cylindrical coil 31, the first planar coil 22, the second planar coil 24, and the second cylindrical coil 32 are coaxially arranged, which helps form a magnetic field with a better magnetism gathering capacity.

The first planar coil 22 and the second planar coil 24 may be completely the same, and certainly may alternatively be different. Dimensions and shapes of the two coils may be properly set according to a specific space.

In this application, at least part of an edge region of a second side surface of the first part is supported at the opening of the concave cavity 12a, and the second cylindrical coil 32 is completely located inside the concave cavity 12a. Referring to FIG. 13, in this application, an upper edge and a lower edge of the second side surface of the circuit board 2 are supported on the first side wall 12. Therefore, coils may cannot be disposed on an upper edge region and a lower edge region of the second side surface to provide a support cooperation region with the first side wall. FIG. 12 shows a distance h between a wire at an outermost ring of the second planar coil 24 and the upper edge. h may be properly set according to a specific product. In this application, a specific value of h is not disclosed, which does not affect understanding and implementation of the technical solutions of this specification by a person skilled in the art.

There is no installation requirement on the first side surface of the circuit board 2. Therefore, an outer ring of the first planar coil may be as close as possible to an edge 202 of the first side surface, as shown in FIG. 11.

The first cylindrical coil 31 and the second cylindrical coil 32 may be fixed to the circuit board 2 through an adhesion process or an injection molding process.

In order to improve the magnetism gathering capacity of the driving coil 3, in this application, a magnetic core component 4 is disposed in an inner hole of the cylindrical coil, that is, in a case that the cylindrical coil includes the first cylindrical coil 31 and the second cylindrical coil 32, the magnetic core component 4 is disposed in at least one of the first cylindrical coil 31 or the second cylindrical coil 32. In this application, an example in which the magnetic core component 4 is disposed in both the first cylindrical coil 31 and the second cylindrical coil 32 is provided, that is, the magnetic core component 4 includes a first magnetic core portion 41 and a second magnetic core portion 42. The first magnetic core portion 41 is disposed in the first cylindrical coil 31, and the first magnetic core portion and the first cylindrical coil may be integrated through injection molding. The second magnetic core portion 42 is disposed in the second cylindrical coil 32, and the second magnetic core portion and the second cylindrical coil may also be integrated through injection molding. Certainly, the first magnetic core portion 41 and the first cylindrical coil 31 may alternatively be separate structures, and the second magnetic core portion 42 and the second cylindrical coil 32 may also be separate structures, which facilitates later maintenance and replacement.

In consideration of impact of an intensity of a magnetic field of the magnetic steel in the movable component 5 on the magnetic core component 4, the following arrangement is further performed in this application.

Referring to FIG. 7 again, in this application, a distance between the magnetic core component 4 and the movable component 5 is greater than a distance between the first cylindrical coil 31 and the movable component 5. As can be seen from FIG. 10, an end surface 411 of the magnetic core component 4 close to the movable component 5 is lower than an upper edge of a top metal wire 311 of the first cylindrical coil 31, that is, the magnetic core component 4 is completely located inside the inner hole of the first cylindrical coil 31, and there is a height difference H1 between a top upper edge of the first cylindrical coil 31 and the end surface 411 of the magnetic core component 4. In a case that the magnetic core component 4 includes the first magnetic core portion 41 of the magnetic core component 4 and the second magnetic core portion 42 of the magnetic core component 4, a distance between the end surface 411 of the first magnetic core portion 41 of the magnetic core component 4 and the top upper edge of the first cylindrical coil 31 is H1.

In this application, the circuit board 2 further has a through hole 201, the through hole 201 runs through inner ring regions of the first planar coil 22 and the second planar coil 24, and the magnetic core component 4 runs through the through hole. In other words, the magnetic core component 4 is also disposed on the inner ring regions of the first planar coil 22 and the second planar coil 24 In an embodiment, the magnetic core component 4 includes a third magnetic core portion 43, and the third magnetic core portion 43 is located in the through hole. The third magnetic core portion 43 matches the through hole 201.

Certainly, the first magnetic core portion 41 matches an inner hole of the first cylindrical coil 31, the second magnetic core portion 42 is located in an inner hole of the second cylindrical coil 32 and matches the inner hole of second cylindrical coil 32. A magnetic core component 4 in this structural form has a high magnetism gathering capacity. In the foregoing example, the first magnetic core portion 41, the second magnetic core portion 42, and the third magnetic core portion 43 are an integrated structure, and certainly may alternatively be separate structures. As described above, the first magnetic core portion 41 and the first cylindrical coil 31 are integrally formed through injection molding, the second magnetic core portion 42 and the second cylindrical coil 32 are integrally formed through injection molding, and the third magnetic core portion 43 and the insulting substrate may be integrally formed through a process such as injection molding or adhesion.

In order to prolong a service life of the second part of the circuit board 2, in this application, an extension portion 122 is disposed on the first side wall 12, and the extension portion 122 is located outside the inner cavity 1a. The second part of the circuit board 2 is supported on the extension portion 122. A shape of the extension portion 122 may be roughly the same as a shape of the second part of the circuit board 2, and certainly may alternatively be larger than or smaller than the second part, that is, a projection of the second part on the extension portion 122 is completely inside the extension portion 122, or partially exceeds the extension portion 122, provided that the second part can be supported.

In addition, this application further provides an electronic device 100, including the vibration motor 106 described in any one of the foregoing implementations.

In this application, the electronic device 100 includes the vibration motor 106. Therefore, the electronic device and the vibration motor also have the foregoing technical effects of the vibration motor 106.

As described above, in this application, a thickness of a bracket is fully utilized to partially or completely embed a driving coil part of the vibration motor 106 inside the bracket. In this way, an installation height of the vibration motor is reduced to a certain extent, thereby reducing an overall thickness of the electronic device, and meeting a design requirement for a light and thin electronic device.

The bracket for fixing the vibration motor 106 may be a metal bracket, for the metal bracket has a high strength and has strong reliability for fixing the vibration motor 106, which can prolong a service life of the electronic device. Certainly, the bracket may alternatively be a bracket made of another material, such as a plastic bracket, for the plastic bracket is light, so that the overall weight of the electronic device is light. A material of the bracket may be properly selected according to a specific usage environment.

The principle and implementations of this application are described in this specification by using specific examples. The description of the foregoing embodiments is merely used for helping understand the method and core ideas of this application. It should be noted that a person of ordinary skill in the art may make several improvements and modifications without departing from the protection scope of this application, which is defined by the appended claims.

## Claims

1. A vibration motor (106), comprising a housing (1), wherein:
a driving coil (3) and a movable component (5) are disposed in an inner cavity (1a) of the housing (1), and the driving coil (3) is configured to drive the movable component (5) to reciprocate relative to the housing (1) to generate vibration;
a first side wall of the housing (112) has a protruding portion protruding toward a side facing away from the movable component (5), the protruding portion forms a concave cavity with an opening facing the movable component (5), and the driving coil (3) is at least partially located in the concave cavity;
elastic components (6) are disposed between two opposite side walls of the movable component (5) and inner walls of the housing (1) on corresponding sides;
the vibration motor (106) further comprises a circuit board (2), wherein the circuit board (2) comprises a first part located in the inner cavity and a second part located outside the inner cavity (1a), a first connection end (21) and a second connection end (21') are disposed on the second part, the driving coil (3) is opposite to the first part, and both ends of the driving coil (3) are electrically connected to the first connection end (21) and the second connection end (21') respectively through corresponding wires on the circuit board (2); and
the driving coil (3) comprises a cylindrical coil and a planar coil, the planar coil is disposed on the first part and wound round by round in a plane of the circuit board (2) along a predetermined direction, and the planar coil and the cylindrical coil are connected in series and have a same current rotation direction.

2. The vibration motor according to claim 1, wherein the planar coil comprises a first planar coil and a second planar coil connected in series and having a same current rotation direction, the first planar coil is located on a first side surface of the circuit board facing the movable component, and the second planar coil is located on a second side surface of the circuit board facing away from the movable component.

3. The vibration motor according to claim 2, wherein the cylindrical coil comprises a first cylindrical coil and a second cylindrical coil, the first cylindrical coil is located on the first side surface, and the second cylindrical coil is located on the second side surface; and the first cylindrical coil, the first planar coil, the second planar coil, and the second cylindrical coil are electrically connected end to end in sequence, and a free end of the first cylindrical coil and a free end of the second cylindrical coil are electrically connected to the first connection end and the second connection end respectively.

4. The vibration motor according to claim 3, wherein the first cylindrical coil, the first planar coil, the second planar coil, and the second cylindrical coil are coaxially arranged.

5. The vibration motor according to claim 3 or 4, wherein at least part of an edge region of a second side surface of the first part is supported at the opening of the concave cavity, and the second cylindrical coil is completely located inside the concave cavity.

6. The vibration motor according to any one of claims 3 to 5, wherein a magnetic core component is further disposed in an inner hole of at least one of the first cylindrical coil or the second cylindrical coil.

7. The vibration motor according to claim 6, wherein the circuit board has a through hole, the through hole runs through inner ring regions of the first planar coil and the second planar coil, and the magnetic core component runs through the through hole.

8. The vibration motor according to claim 7, wherein the magnetic core component comprises a first magnetic core portion, a second magnetic core portion, and a third magnetic core portion, the first magnetic core portion is located in the inner hole of the first cylindrical coil and matches the inner hole of the first cylindrical coil, the second magnetic core portion is located in the inner hole of the second cylindrical coil and matches the inner hole of the second cylindrical coil, and the third magnetic core portion matches the through hole.

9. The vibration motor according to any one of claims 3 to 8, wherein the movable component has a groove at a position opposite to the second cylindrical coil, and the second cylindrical coil partially extends into the groove.

10. The vibration motor according to any one of claims 1 to 9, wherein the first side wall has an extension portion, the extension portion is located outside the inner cavity, and the second part is supported on the extension portion.

11. The vibration motor according to any one of claims 1 to 10, wherein the movable component comprises a mass block and at least one magnetic steel installed on the mass block, and the elastic component is installed between the mass block and the housing.

12. An electronic device, comprising the vibration motor according to any one of claims 1 to 11, wherein the vibration motor is fixed to the electronic device through a bracket, and along a direction in which the protruding portion protrudes, an outer wall of the protruding portion does not exceed an outer wall of the bracket.

## Patentansprüche

1. Vibrationsmotor (106), umfassend ein Gehäuse (1), wobei:
eine Antriebsspule (3) und eine bewegliche Komponente (5) in einem inneren Hohlraum (1a) des Gehäuses (1) angeordnet sind und die Antriebsspule (3) dazu konfiguriert ist, die bewegliche Komponente (5) dazu anzutreiben, sich relativ zum Gehäuse (1) hin- und herzubewegen, um Vibrationen zu erzeugen;
eine erste Seitenwand des Gehäuses (112) einen vorspringenden Abschnitt aufweist, der zu einer von der beweglichen Komponente (5) abgewandten Seite vorsteht, wobei der vorspringende Abschnitt einen konkaven Hohlraum mit einer der beweglichen Komponente (5) zugewandten Öffnung bildet und die Antriebsspule (3) zumindest teilweise in dem konkaven Hohlraum angeordnet ist;
elastische Komponenten (6) zwischen zwei gegenüberliegenden Seitenwänden der beweglichen Komponente (5) und Innenwänden des Gehäuses (1) auf entsprechenden Seiten angeordnet sind;
der Vibrationsmotor (106) ferner eine Leiterplatte (2) umfasst, wobei die Leiterplatte (2) einen ersten Teil, der in dem inneren Hohlraum angeordnet ist, und einen zweiten Teil, der außerhalb des inneren Hohlraums (1a) angeordnet ist, umfasst, ein erstes Anschlussende (21) und ein zweites Anschlussende (21') auf dem zweiten Teil angeordnet sind, die Antriebsspule (3) dem ersten Teil gegenüberliegt und beide Enden der Antriebsspule (3) jeweils durch entsprechende Leitungen auf der Leiterplatte (2) elektrisch mit dem ersten Anschlussende (21) und dem zweiten Anschlussende (21') verbunden sind; und
die Antriebsspule (3) eine zylindrische Spule und eine Planarspule umfasst, wobei die Planarspule auf dem ersten Teil angeordnet und Windung für Windung in einer Ebene der Leiterplatte (2) entlang einer vorbestimmten Richtung gewickelt ist, und die Planarspule und die zylindrische Spule in Reihe geschaltet sind und eine gleiche Stromdrehrichtung aufweisen.

2. Vibrationsmotor nach Anspruch 1, wobei die Planarspule eine erste Planarspule und eine zweite Planarspule umfasst, die in Reihe geschaltet sind und eine gleiche Stromdrehrichtung aufweisen, wobei die erste Planarspule auf einer ersten Seitenfläche der Leiterplatte angeordnet ist, die der beweglichen Komponente zugewandt ist, und die zweite Planarspule auf einer zweiten Seitenfläche der Leiterplatte angeordnet ist, die von der beweglichen Komponente abgewandt ist.

3. Vibrationsmotor nach Anspruch 2, wobei die zylindrische Spule eine erste zylindrische Spule und eine second zylindrische Spule umfasst, die erste zylindrische Spule auf der ersten Seitenfläche angeordnet ist und die zweite zylindrische Spule auf der zweiten Seitenfläche angeordnet ist; und die erste zylindrische Spule, die erste Planarspule, die zweite Planarspule und die zweite zylindrische Spule nacheinander elektrisch Ende an Ende verbunden sind und ein freies Ende der ersten zylindrischen Spule und ein freies Ende der zweiten zylindrischen Spule jeweils elektrisch mit dem ersten Anschlussende und dem zweiten Anschlussende verbunden sind.

4. Vibrationsmotor nach Anspruch 3, wobei die erste zylindrische Spule, die erste Planarspule, die zweite Planarspule und die zweite zylindrische Spule koaxial angeordnet sind.

5. Vibrationsmotor nach Anspruch 3 oder 4, wobei zumindest ein Teil eines Randbereichs einer zweiten Seitenfläche des ersten Teils an der Öffnung des konkaven Hohlraums abgestützt ist und die zweite zylindrische Spule vollständig innerhalb des konkaven Hohlraums angeordnet ist.

6. Vibrationsmotor nach einem der Ansprüche 3 bis 5, wobei ferner eine Magnetkernkomponente in einem Innenloch der ersten zylindrischen Spule und/oder der zweiten zylindrischen Spule angeordnet ist.

7. Vibrationsmotor nach Anspruch 6, wobei die Leiterplatte ein Durchgangsloch aufweist, das Durchgangsloch durch Innenringbereiche der ersten Planarspule und der zweiten Planarspule verläuft und die Magnetkernkomponente durch das Durchgangsloch verläuft.

8. Vibrationsmotor nach Anspruch 7, wobei die Magnetkernkomponente einen ersten Magnetkernabschnitt, einen zweiten Magnetkernabschnitt und einen dritten Magnetkernabschnitt umfasst, wobei der erste Magnetkernabschnitt im Innenloch der ersten zylindrischen Spule angeordnet ist und zum Innenloch der ersten zylindrischen Spule passt, der zweite Magnetkernabschnitt im Innenloch der zweiten zylindrischen Spule angeordnet ist und zum Innenloch der zweiten zylindrischen Spule passt und der dritte Magnetkernabschnitt zum Durchgangsloch passt.

9. Vibrationsmotor nach einem der Ansprüche 3 bis 8, wobei die bewegliche Komponente an einer der zweiten zylindrischen Spule gegenüberliegenden Position eine Nut aufweist und die zweite zylindrische Spule teilweise in die Nut ragt.

10. Vibrationsmotor nach einem der Ansprüche 1 bis 9, wobei die erste Seitenwand einen Verlängerungsabschnitt aufweist, der Verlängerungsabschnitt außerhalb des Innenraums angeordnet ist und der zweite Teil auf dem Verlängerungsabschnitt abgestützt ist.

11. Vibrationsmotor nach einem der Ansprüche 1 bis 10, wobei die bewegliche Komponente einen Massenblock und mindestens einen am Massenblock installierten Magnetstahl umfasst und das elastische Bauteil zwischen dem Massenblock und dem Gehäuse installiert ist.

12. Elektronisches Gerät, umfassend den Vibrationsmotor nach einem der Ansprüche 1 bis 11, wobei der Vibrationsmotor über eine Halterung an dem elektronischen Gerät befestigt ist und eine Außenwand des vorspringenden Abschnitts entlang einer Richtung, in die der vorspringende Abschnitt vorsteht, nicht über eine Außenwand der Halterung hinausgeht.

## Revendications

1. Moteur de vibration (106), comprenant un boîtier (1), dans lequel :
une bobine d'entraînement (3) et un composant mobile (5) sont disposés dans une cavité interne (la) du boîtier (1), et la bobine d'entraînement (3) est configurée pour entraîner le composant mobile (5) à effectuer un mouvement de va-et-vient par rapport au boîtier (1) pour générer une vibration ;
une première paroi latérale du boîtier (112) présente une partie saillante faisant saillie vers un côté orienté à l'opposé du composant mobile (5), la partie saillante forme une cavité concave avec une ouverture faisant face au composant mobile (5), et la bobine d'entraînement (3) est située au moins partiellement dans la cavité concave ;
des composants élastiques (6) sont disposés entre deux parois latérales opposées du composant mobile (5) et des parois internes du boîtier (1) sur des côtés correspondants ;
le moteur de vibration (106) comprend en outre une carte de circuit imprimé (2), dans lequel la carte de circuit imprimé (2) comprend une première partie située dans la cavité interne et une seconde partie située à l'extérieur de la cavité interne (1a), une première extrémité de connexion (21) et une seconde extrémité de connexion (21') sont disposées sur la seconde partie, la bobine d'entraînement (3) est opposée à la première partie, et les deux extrémités de la bobine d'entraînement (3) sont connectées électriquement à la première extrémité de connexion (21) et à la seconde extrémité de connexion (21') respectivement par l'intermédiaire de fils correspondants sur la carte de circuit imprimé (2) ; et
la bobine d'entraînement (3) comprend une bobine cylindrique et une bobine plane, la bobine plane est disposée sur la première partie et enroulée tour par tour dans un plan de la carte de circuit imprimé (2) le long d'une direction prédéterminée, et la bobine plane et la bobine cylindrique sont connectées en série et ont un même sens de rotation du courant.

2. Moteur de vibration selon la revendication 1, dans lequel la bobine plane comprend une première bobine plane et une seconde bobine plane connectées en série et ayant un même sens de rotation du courant, la première bobine plane est située sur une première surface latérale de la carte de circuit imprimé faisant face au composant mobile, et la seconde bobine plane est située sur une seconde surface latérale de la carte de circuit imprimé orientée à l'opposé du composant mobile.

3. Moteur de vibration selon la revendication 2, dans lequel la bobine cylindrique comprend une première bobine cylindrique et une seconde bobine cylindrique, la première bobine cylindrique est située sur la première surface latérale, et la seconde bobine cylindrique est située sur la seconde surface latérale ; et la première bobine cylindrique, la première bobine plane, la seconde bobine plane et la seconde bobine cylindrique sont connectées électriquement bout à bout en séquence, et une extrémité libre de la première bobine cylindrique et une extrémité libre de la seconde bobine cylindrique sont connectées électriquement à la première extrémité de connexion et à la seconde extrémité de connexion respectivement.

4. Le moteur de vibration selon la revendication 3, dans lequel la première bobine cylindrique, la première bobine plane, la deuxième bobine plane et la deuxième bobine cylindrique sont disposées de manière coaxiale.

5. Le moteur de vibration selon la revendication 3 ou 4, dans lequel au moins une partie d'une région de bord d'une deuxième surface latérale de la première partie est supportée au niveau de l'ouverture de la cavité concave, et la deuxième bobine cylindrique est située complètement à l'intérieur de la cavité concave.

6. Le moteur de vibration selon l'une quelconque des revendications 3 à 5, dans lequel un composant de noyau magnétique est en outre disposé dans un trou interne d'au moins l'une de la première bobine cylindrique ou de la deuxième bobine cylindrique.

7. Le moteur de vibration selon la revendication 6, dans lequel la carte de circuit imprimé présente un trou traversant, le trou traversant traverse des régions de bague interne de la première bobine plane et de la deuxième bobine plane, et le composant de noyau magnétique traverse le trou traversant.

8. Le moteur de vibration selon la revendication 7, dans lequel le composant de noyau magnétique comprend une première partie de noyau magnétique, une deuxième partie de noyau magnétique et une troisième partie de noyau magnétique, la première partie de noyau magnétique est située dans le trou interne de la première bobine cylindrique et correspond au trou interne de la première bobine cylindrique, la deuxième partie de noyau magnétique est située dans le trou interne de la deuxième bobine cylindrique et correspond au trou interne de la deuxième bobine cylindrique, et la troisième partie de noyau magnétique correspond au trou traversant.

9. Le moteur de vibration selon l'une quelconque des revendications 3 à 8, dans lequel le composant mobile présente une rainure au niveau d'une position opposée à la deuxième bobine cylindrique, et la deuxième bobine cylindrique s'étend partiellement dans la rainure.

10. Le moteur de vibration selon l'une quelconque des revendications 1 à 9, dans lequel la première paroi latérale présente une partie d'extension, la partie d'extension est située à l'extérieur de la cavité interne, et la deuxième partie est supportée sur la partie d'extension.

11. Le moteur de vibration selon l'une quelconque des revendications 1 à 10, dans lequel le composant mobile comprend une masse d'inertie et au moins un acier magnétique installé sur la masse d'inertie, et le composant élastique est installé entre la masse d'inertie et le boîtier.

12. Dispositif électronique, comprenant le moteur de vibration selon l'une quelconque des revendications 1 à 11, dans lequel le moteur de vibration est fixé au dispositif électronique par l'intermédiaire d'un support, et le long d'une direction dans laquelle la partie saillante fait saillie, une paroi externe de la partie saillante ne dépasse pas une paroi externe du support.
